# EUROPÄISCHE PATENTSCHRIFT

(11) **EP 0 706 932 B1**
(45) Veröffentlichungstag und Bekanntmachung des Hinweises auf die Patenterteilung: **25.11.1998**
(21) Anmeldenummer: 95114093.8
(22) Anmeldetag: 08.09.1995
(51) Int. Cl.: B62H 3/00, B62H 3/04

(54) **Fahrradständer**
Bicycle stand
Support de bicyclette

(30) Priorität: 14.10.1994 DE 9416533 U
(43) Veröffentlichungstag der Anmeldung: 17.04.1996
(73) Patentinhaber: EISEN- UND DRAHTWERK ERLAU AKTIENGESELLSCHAFT, D-73431 Aalen (DE)
(72) Erfinder: Müller, Anton, D-73432 Aalen (DE)
(74) Vertreter: Jackisch-Kohl, Anna-Katharina

(56) Entgegenhaltungen:
- CH-A- 684 185
- DE-U- 9 011 763
- DE-U- 9 311 668
- FR-A- 2 558 430
- US-A- 4 371 082

## Beschreibung

Die Erfindung betrifft einen Fahrradständer nach dem Oberbegriff des Anspruches 1.

Bei diesem bekannten Fahrradständer (US-A-4 371 082) ist auf dem oberen Ende des vertikalen Standbeins ein horizontales Querstück befestigt. Es bildet in entgegengesetzte Richtungen ragende Träger, an deren freie Enden entgegengesetzt zueinander gerichtete Halter zur Aufnahme des Fahrrades vorgesehen sind. Die Halter stehen senkrecht von den Trägern ab und werden durch parallel zueinander liegende Bügel gebildet, zwischen die eine Fahrradstange eingesetzt wird. Da die Fahrradstange geneigt verläuft, die Halter jedoch senkrecht von den Trägern abstehen, müssen sie verhältnismäßig lang sein, um das schräg verlaufende Fahrradrohr sicher aufnehmen zu können. Da die Halter auf gleicher Höhe liegen und entgegengesetzt zueinander gerichtet sind, können mehrere Fahrradständer nur in einem entsprechend großen Abstand hintereinander aufgestellt werden. Dadurch kann die zur Verfügung stehende Parkfläche nicht optimal ausgenutzt werden.

Es ist auch ein Fahrradständer bekannt (FR-A-2 558 430), bei dem auf einen Träger hülsenförmige Tragteile aufgeschoben werden, von denen jeweils ein Rahmen quer absteht. An ihn schließen zwei Schenke an, die jeweils mit einer Vertiefung zur Aufnahme eines Lenkerteiles des Fahrrades versehen sind. Der Fahrradständer ist nach dem Baukastenprinzip aufgebaut und besteht aus einer Vielzahl von Einzelteilen.

Bei einem anderen bekannten Fahrradständer (DE-U-93 11 668) sind im vertikalen Standbein zwei L-förmige Führungsrohre gelagert, deren horizontale Schenkel sich entgegengesetzt zueinander erstrecken und an deren freie Enden Halterungen vorgesehen sind. Sie liegen zwar auf unterschiedliche Höhe, stehen jedoch entgegengesetzt zueinander von den horizontalen Schenkeln der Führungsrohre ab.

Es ist auch ein Fahrradständer bekannt (DE-U-90 11 763), der mit nur einem einzigen Halter versehen ist. Darum kann an ihm auch nur ein Fahrrad geparkt werden.

Der Erfindung liegt die Aufgabe zugrunde, den gattungsgemäßen Fahrradständer so auszubilden, daß er konstruktiv einfach ausgebildet ist und daß mit ihm die jeweils zur Verfügung stehende Parkfläche optimal ausgenutzt werden kann.

Diese Aufgabe wird beim gattungsgemäßen Fahrradständer erfindungsgemäß mit den kennzeichnenden Merkmalen des Anspruches 1 gelöst.

Beim erfindungsgemäßen Fahrradständer stehen die Träger vom horizontalen Schenkel des Standbeins ab. Die beiden Halter sind in Höhenrichtung des Standbeins versetzt zueinander angeordnet und weisen in die gleiche Richtung. Darum können die Fahrräder an einer Seite des Fahrradständers eng benachbart nebeneinander geparkt werden. Da die Halter auf unterschiedlicher Höhe liegen, behindern beispielsweise die Pedale benachbarter Fahrräder einander nicht. Da die Halter schräg nach unten geneigt angeordnet sind, können sie kurz ausgebildet sein und dennoch zuverlässig das schräg liegende Fahrradrohr aufnehmen. Infolge der zueinander versetzten Lage der Halter können Fahrräder eng benachbart und auf Lücke zueinander geparkt werden, so daß die jeweilige Parkfläche optimal ausgenutzt werden kann. Trotz dieser dichten Anordnung der Fahrräder an den Fahrradständern ist zwischen ihnen bzw. den Fahrrädern noch so viel Freiraum vorhanden, daß das Fahrrad bequem am Fahrradständer geparkt bzw. wieder von ihm entfernt werden kann. Die erfindungsgemäßen Fahrradständer können nicht nur eng benachbart nebeneinander, sondern auch eng benachbart hintereinander angeordnet werden, so daß eine Parkfläche optimal ausgenutzt werden kann.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt
- Fig. 1: in Seitenansicht einen erfindungsgemäßen Fahrradständer mit zwei daran geparkten Fahrrädern,
- Fig. 2: den Ständer nach Fig. 1 in perspektivischer und vergrößerter Darstellung,
- Fig. 3: in einer Ansicht gemäß Pfeil II in Fig. 2 den erfindungsgemäßen Fahrradständer,
- Fig. 4: den Fahrradständer gemäß Fig. 3 in Seitenansicht,
- Fig. 5: den Fahrradständer nach Fig. 3 in Draufsicht,
- Fig. 6: in Draufsicht eine Vielzahl erfindungsgemäßer Fahrradständer, die mit Abstand nebeneinander angeordnet sind und an denen jeweils zwei Fahrräder geparkt sind,
- Fig. 7: eine Darstellung entsprechend Fig. 6, wobei zwei Reihen von Fahrradständern hintereinander angeordnet sind.

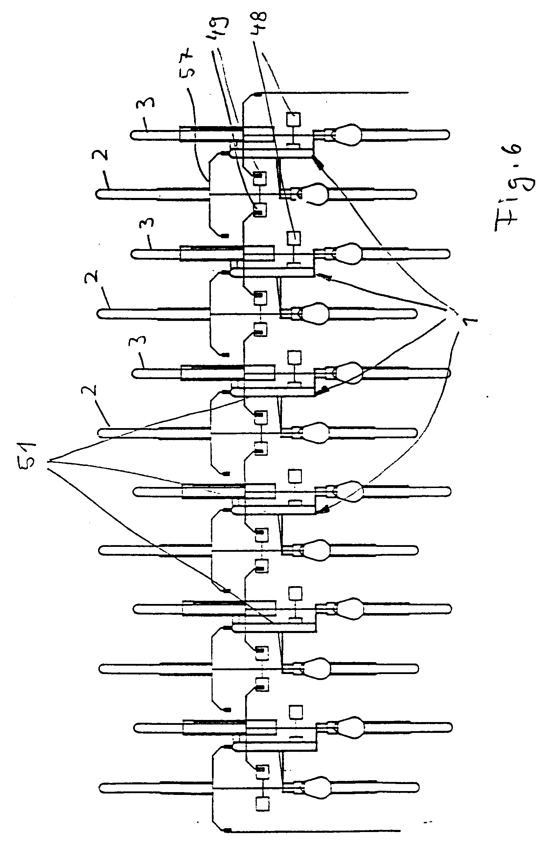

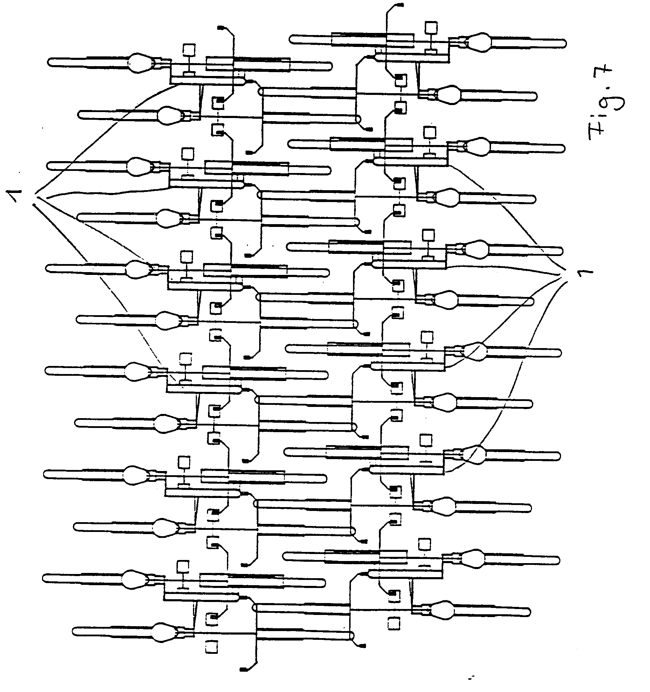

Der in den Zeichnungen dargestellte Fahrradständer 1 eignet sich zum Parken zweier Fahrräder 2 und 3 und kann mit einer Vielzahl gleicher Ständer in Reihe nebeneinander (Fig. 6) und auch in Reihen hintereinander (Fig. 7) angeordnet werden. Somit eignet er sich besonders für überdachte Parkplätze, bei denen relativ wenig und dadurch teure Parkflächen vorhanden sind. Solche Parkplätze sind meist bei öffentlichen Gebäuden, wie Schulen, Bädern und dergleichen, vorhanden, wo mit diesen Fahrradständern der Raum optimal ausgenutzt werden kann.

Der Fahrradständer 1 hat ein L-förmig gebogenes Standbein 4, das vorzugsweise aus einem Rohr hergestellt ist. Mit dem längeren Schenkel 5 ist das Standbein 4 am Boden verankert, während der andere, etwas kürzere Schenkel 6 horizontal verläuft und zwei Halter 9 und 10 für die Fahrräder 2 und 3 trägt. Die Halter 9 und 10 sind an Trägern 7 und 8 befestigt, die quer vom Schenkel 6 abstehen und entgegengesetzt zueinander gerichtet sind.

Die Halter 9 und 10 sind in an sich bekannter Weise mit einem Klemmteil 11, 12 versehen, das mit einem (nicht dargestellten) Steckteil in einem quer vom Träger 7, 8 abstehenden Rohrstück 21, 22 gehalten wird. Die Klemmteile 11, 12 haben einander gegenüberliegende Klemmschenkel 13, 14 bzw. 15, 16, die eine Klemmaufnahme 17, 18 für ein Mittel- bzw. Sitzrohr 19, 20 der Fahrräder 2, 3 begrenzen. Die Halter 9, 10 sind am Standbein 4 derart geneigt angeordnet, daß ihre Klemmschenkel 13, 14; 15, 16 zum Sitzrohr 19, 20 senkrecht verlaufen. Dadurch können die Fahrräder zum Parken direkt in Fahrtrichtung bequem in die Klemmteile 11, 12 eingeschoben bzw. wieder entnommen werden. In den Klemmaufnahmen 17, 18 werden die Mittelrohre 19, 20 der Fahrräder 2, 3 infolge der elastischen Verformung der Klemmschenkel 13 bis 16 klemmend gehalten.

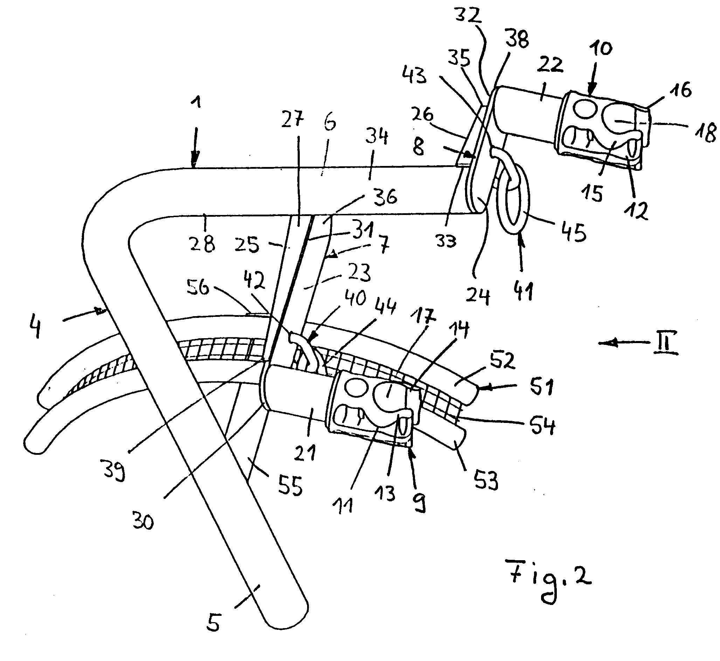

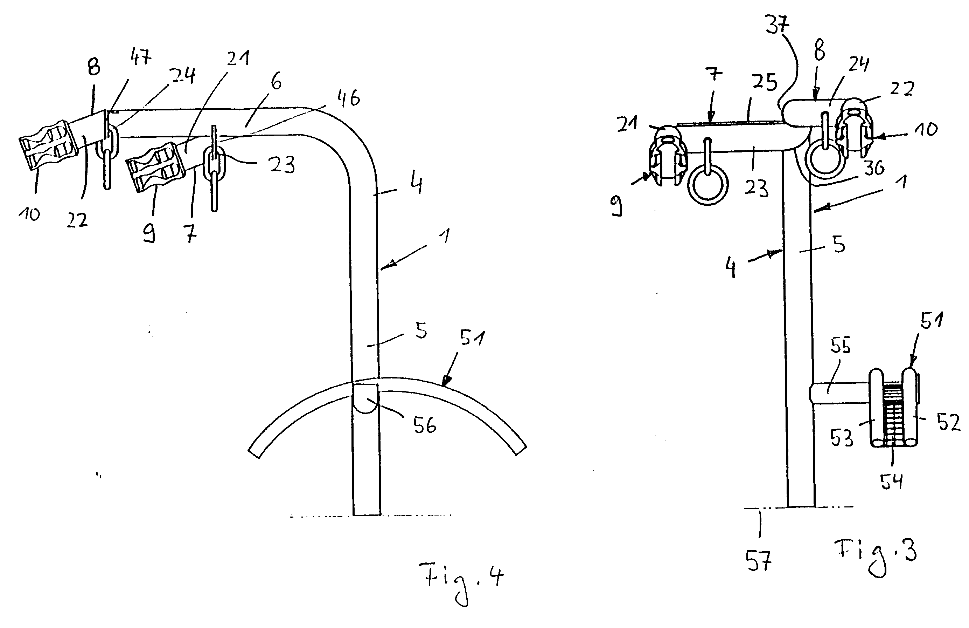

Wie insbesondere die Fig. 2 bis 5 zeigen, liegen die Halter 9 und 10 auf verschiedenen Seiten des Horizontalschenkels 6 und auf verschiedenen Höhen sowie versetzt zueinander. Der Halter 9 ist am Träger 7 befestigt, der einen Tragarm 23 mit einer Versteifungsleiste 25 sowie dem Rohrstück 21 aufweist. Der Tragarm 23 ist etwa halb so lang wie der Horizontalschenkel 6 des Standbeines 4; seine Breite entspricht etwa dem Rohrdurchmesser des Standbeines. Die Enden 30 und 36 des Tragarmes 23 sind teilkreisförmig abgerundet. Das Rohrstück 21 ist an dem einen Ende 30 vorzugsweise verschweißt. Auf dem oberen Rand 31 des Tragarmes 23 liegt die Versteifungsleiste 25 auf und erstreckt sich senkrecht zum Tragarm 23. Die Versteifungsleiste 25 verjüngt sich vom Standbeinschenkel 6 aus. Das freie Ende 39 der Versteifungsleiste 25 reicht bis nahe an das Rohrstück 21. Wie Fig.3 zeigt, liegt der Träger 7 im wesentlichen im Bereich unterhalb des Standbeinschenkels 6.

Der andere Träger 8 hat einen Tragarm 24, der etwa halb so lang ist wie der im übrigen gleich ausgebildete Tragarm 23 und mit seinem einen Ende auf der Stirnseite des Standbeinschenkels 6 befestigt ist. Am anderen Tragarmende ist das Rohrstück 22 befestigt, das senkrecht vom Tragarm 24 absteht. An der vom Rohrstück 22 abgewandten Seite des Tragarmes 24 ist eine Versteifungsleiste 26 befestigt, die in Richtung auf ihr vom Standbeinschenkel 6 abgewandtes Ende stetig verjüngt ausgebildet ist. Die Versteifungsleiste 26 liegt mit ihrem breiteren Ende 33 auf der Oberseite 34 des Standbeinschenkels 6 auf, während ihr schmales Ende 35 bis in Höhe des Rohrstückes 22 reicht, jedoch vom freien Ende 32 des Tragarmes 24 Abstand hat.

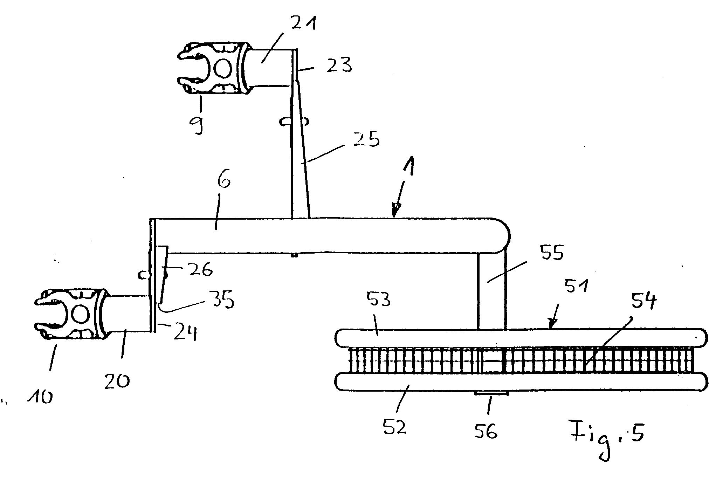

Die beiden Tragarme 23, 24 sind jeweils leistenförmig ausgebildet und hochkant angeordnet. Die Halter 9, 10 erstrecken sich in gleiche Richtungen und liegen parallel zueinander (Fig. 4 und 5).

An jedem Tragarm 23, 24 ist ein Sicherungsteil 40 bzw. 41 für das zugehörige Fahrrad vorgesehen. Die Sicherungteile bestehen vorzugsweise aus Ringen, wobei der eine Ring in eine Öffnung 42 bzw. 43 des Tragarmes 23; 24 eingehängt ist. Am anderen Ring 44, 45 kann eine Sicherungskette, ein Drahtseil, ein Bügelschloß oder dergleichen zur Diebstahlsicherung des Fahrrads befestigt werden, so daß die Fahrräder einwandfrei gesichert werden können. Da die Sicherungsteile 40, 41 beiderseits des Ständers 4 und seitlich von dem zu sichernden Fahrrad vorgesehen sind, können solche Sicherungsketten, Drahtseile oder dergleichen bequem von einem zwischen einander benachbarten Fahrradständern 1 gebildeten Gang aus befestigt werden.

Wie insbesondere Fig. 4 zeigt, wird die Neigung der Halter 9, 10 bzw. ihrer Klemmteile 11, 12 mit einem Winkel von 90° zum Mittelrohr 19, 20 der Fahrräder 2, 3 dadurch erreicht, daß die Rohrstücke 21, 22 mit einer abgeschrägten Stirnseite 46, 47 an den Tragarmen 23 bzw. 24 befestigt sind, die in der Einbaulage jeweils in einer Vertikalebene liegen. Die Achse der Rohrstücke 21, 22 liegt unter einem spitzen Winkel zum Horizontalschenkel 6 des Standbeines 4. Durch die asymmetrische Anordnung der Halter 9, 10 in unterschiedlichen Lagen und in unterschiedlicher Höhe zum Standbein 4 wird erreicht, daß die Pedale 48 der beiden an demselben Standbein 4 gehaltenen Fahrräder 2, 3 mit Abstand voneinander und hintereinander angeordnet sind, so daß sie einander gegenseitig nicht behindern. Da der Halter 10 in Höhenrichtung gegenüber dem Halter 9 nach oben versetzt ist, wird dieser Freiraum für die Pedale noch vergrößert.

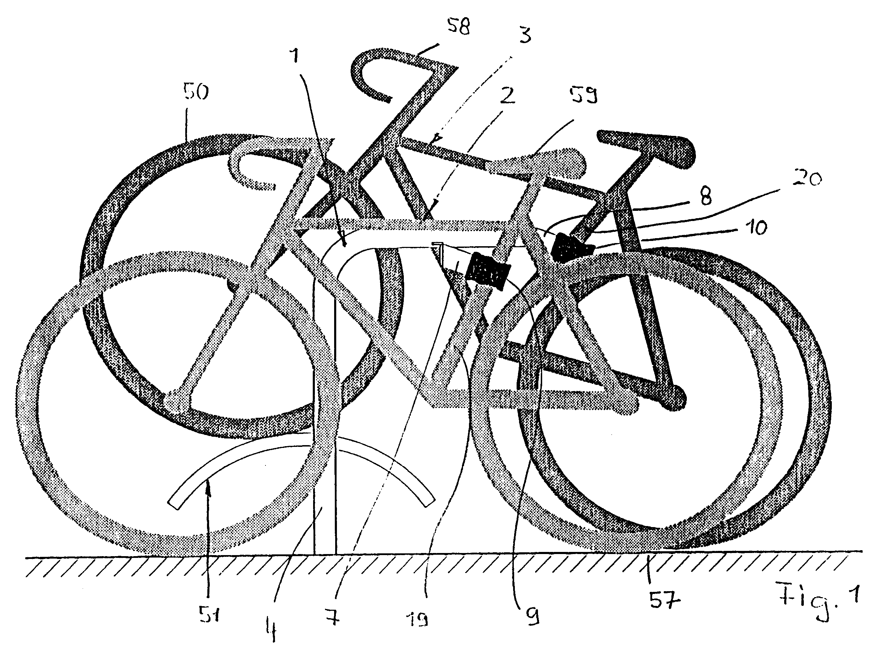

In der in Fig. 1 dargestellten, schräg nach oben gekippten Lage des Fahrrades 3 wird das angehobene Vorderrad 50 durch eine Stütze 51 abgestützt, die auf der gleichen Seite des Standbeines 4 wie der Halter 10 vorgesehen ist. Sie ist teilkreisförmig gebogen und hat randseitige Rohrbögen 52 und 53 (Fig. 2 bis 5), zwischen denen als Aufstandsfläche ein entsprechend gekrümmtes Gitter 54 befestigt ist. Die Stütze 51 liegt auf einem senkrecht vom Vertikalschenkel 5 des Standbeines 4 abstehenden Rohrstück 55 auf, an dessen Ende ein aufwärts ragender Anschlag 56 befestigt ist. An ihm liegt der äußere Rohrbogen 52 an. Die Stütze 51 ist in einem solchen Abstand vom Boden 57 am Vertikalschenkel 5 befestigt, daß das Fahrrad 3 in geparkter Stellung (Fig. 1) mit seinem Vorderrad 50 etwa auf der höchsten Stelle der bogenförmigen, aufwärts gekrümmten Stütze 51 steht. Beim Parken dient die Stütze 51 als Auffahrrampe, wobei der Lenker 58 des zweiten Fahrrades 3 über den Sattel 59 des ersten, bereits geparkten Fahrrades 2, ohne an diesem anzustoßen, angehoben wird.

Durch die als Gitter ausgebildete Auffahrfläche 54 der Stütze 51 ist eine problemlose Reinigung der Stütze sichergestellt. Durch sie kann Wasser, Schmutz und dgl. nach unten gelangen. Zwischen den beiden Rohrbögen 52 und 53 ist das Rad beim Auffahren auf die Stütze sicher geführt, da die über das Gitter 54 überstehenden Rohrabschnitte hierbei als Führung für das Vorderrad dienen. Durch die offene Ausbildung der Fläche 54 der Stütze 51 ist eine Reinigung nicht nur einfach, sondern weitgehend vermieden, weil sich Schmutz gar nicht erst festsetzen kann.

Wie Fig. 6 zeigt, wird vorteilhaft auf öffentlichen Parkplätzen, wo wenig Platz zur Verfügung steht, eine Vielzahl von Ständern 1 in Reihe nebeneinander angeordnet, wobei sie jeweils gleichen Abstand voneinander haben, der etwas größer ist als die maximale Breite der Lenker 57. Im Ausführungsbeispiel beträgt der Abstand zwischen den beiden Fahrrädern 2 und 3 vorzugsweise 35 cm, so daß der Abstand zwischen einander benachbarten Fahrrädern 2 bzw. den zweiten, auf der Stütze 51 abgestützten Fahrrädern 3 70 cm beträgt, jeweils gemessen zwischen den Fahrradlängsmittelebenen. Bei einer solchen Anordnung der Ständer ist gewährleistet, daß die Fahrräder problemlos nebeneinander und auf kleinstem Raum geparkt werden können, wobei die Fahrräder leicht zugänglich sind, um sie zu parken bzw. sie wieder vom Ständer abzunehmen oder auch um die Fahrräder gegen Diebstahl mittels der Sicherungsteile 47, 48 zu sichern. Solche Reihen von Fahrradständern können auch in beliebiger Länge und in beliebiger Anzahl mit Abstand hintereinander angeordnet werden, wie Fig. 7 zeigt. Auch bei einer solchen Anordnung ist das Parken der Fahrräder problemlos möglich, wobei auf engstem Raum eine größtmögliche Zahl von Fahrrädern geparkt werden kann.

## Patentansprüche

1. Fahrradständer (1) mit einem aufwärts ragenden Standbein (4), an dem zwei in entgegengesetzte Richtungen ragende Träger (7, 8) vorgesehen sind, die quer vom Standbein (4) abstehen und Halter (9, 10) für Fahrräder (2, 3) aufweisen, die quer von den Trägern (7, 8) abstehen
dadurch gekennzeichnet, daß das Standbein (4) einen oberen, horizontalen Schenkel (6) aufweist, von dem die Träger (7, 8) quer abstehen, und daß die beiden Halter (9, 10) in Höhenrichtung des Standbeins (4) versetzt zueinander und schräg nach unten geneigt angeordnet sind.

2. Fahrradständer nach Anspruch 1,
dadurch gekennzeichnet, daß der eine Halter (9) größeren Abstand vom horizontalen Schenke (6) des Standbeines (4) hat als der andere Haller (10).

3. Fahrradständer nach Anspruch 1 oder 2,
dadurch gekennzeichnet, daß die Haller (9, 10) an einem schräg nach unten geneigt angeordneten Rohrstück (21, 22) vorgesehen sind, das am Träger (7, 8) befestigt ist.

4. Fahrradständer nach einem der Ansprüche 1 bis 3,
dadurch gekennzeichnet, daß die Träger (7, 8) jeweils einen plattenförmigen, mit wenigstens einem Versteifungsteil (25, 26) versehenen Tragarm (23, 24) aufweisen.

5. Fahrradständer nach einem der Ansprüche 1 bis 4,
dadurch gekennzeichnet, daß der eine Träger (8) am freien Ende des horizontalen Schenkels (6) des Standbeines (4) und der andere Träger (7) mit Abstand vom freien Ende des horizontalen Schenkels (6) vorgesehen ist.

6. Fahrradständer nach einem der Ansprüche 1 bis 5,
dadurch gekennzeichnet, daß die Halter (9, 10) Klemmteile (11, 12) aufweisen, in denen die Fahrräder (2, 3) mit ihren Mittel-bzw. Sitzrohren (19, 20) klemmend gehalten sind.

7. Fahrradständer nach einem der Ansprüche 1 bis 6,
dadurch gekennzeichnet, daß an einem Vertikalschenkel (5) des Standbeines (4) an dessen einer Seite mit Abstand vom Boden (57) eine Stütze (51) vorgesehen ist.

8. Fahrradständer nach Anspruch 7,
dadurch gekennzeichnet, daß die Stütze (51) als Auffahrrampe für ein Vorderrad des Fahrrades (2, 3) ausgebildet ist.

9. Fahrradständer nach Anspruch 7 oder 8,
dadurch gekennzeichnet, daß die Stütze (51) auf derselben Seite wie der mit kleinerem seitlichen Abstand vom Standbein (4) vorgesehene Halter (10) liegt.

10. Fahrradständer nach einem der Ansprüche 7 bis 9,
dadurch gekennzeichnet, daß die Stütze (51) annähernd halbkreisförmig ausgebildet ist.

11. Fahrradständer nach einem der Ansprüche 7 bis 10,
dadurch gekennzeichnet, daß die Stütze (51) auf einem Arm (55) angeordnet ist und vom Standbein (4) größeren Abstand hat als der eine Halter (10).

12. Fahrradständer nach einem der Ansprüche 7 bis 11,
dadurch gekennzeichnet, daß die Stütze (51) zwei mit Abstand voneinander liegende seitliche Rohrbögen (52, 53) aufweist, die über eine Auflagefläche (54) für das Rad (55) miteinander verbunden sind.

13. Fahrradständer nach Anspruch 12,
dadurch gekennzeichnet, daß die Auflagefläche (54) aus Gittermaterial besteht.

14. Fahrradständer nach Anspruch 12 oder 13,
dadurch gekennzeichnet, daß der Abstand der Rohrbögen (52, 53) voneinander größer ist als die Breite des Vorderrades (55) des Fahrrades (2, 3).

15. Fahrradständer nach einem der Ansprüche 12 bis 14,
dadurch gekennzeichnet, daß die Stütze (51) mit ihrem äußeren Rohrbogen (52) an einem Anschlag (56) anliegt.

16. Fahrradständer nach einem der Ansprüche 4 bis 15,
dadurch gekennzeichnet, daß an den Tragarmen (23, 24) der Träger (7, 8) mindestens ein Sicherungsteil (40, 41) befestigt ist.

17. Fahrradständer nach Anspruch 16,
dadurch gekennzeichnet, daß das Sicherungsteil (40, 41) ein Sicherungsring ist.

## Claims

1. A bicycle stand (1) with an upwardly extending supporting post (4) on which two bearers (7, 8) extending in opposite directions are provided, which project transversely from the supporting post (4) and which have holders (9, 10) for bicycles (2, 3), which holders project transversely from the bearers (7, 8),
characterised in that the supporting post (4) has an upper horizontal limb (6), from which the bearers (7, 8) project transversely, and in that the two holders (9, 10), in a vertical direction of the supporting post (4), are arranged offset from each other and angled downwards.

2. A bicycle stand according to claim 1,
characterised in that one holder (9) is a greater distance from the horizontal limb (6) of the supporting post (4) than the other holder (10).

3. A bicycle stand according to claim 1 or 2,
characterised in that the holders (9, 10) are provided on a section of tube (21, 22) angled downwards, which section of tube is attached to the bearer (7, 8).

4. A bicycle stand according to any one of claims 1 to 3,
characterised in that the bearers (7, 8) each have a plate-shaped bracket (23, 24) provided with at least one reinforcement piece (25, 26).

5. A bicycle stand according to one of claims 1 to 4,
characterised in that one bearer (8) is provided at the free end of the horizontal limb (6) of the supporting post (4), and the other bearer (7) is provided at a distance from the free end of the horizontal limb (6).

6. A bicycle stand according to any one of claims 1 to 5,
characterised in that holders (9, 10) have clamping parts (11, 12), in which the bicycles (2, 3) are held clamped with their central or seat tubes (19, 20).

7. A bicycle stand according to any one of claims 1 to 6,
characterised in that a stay (51) is provided at a distance from the ground (57) on one side of a vertical limb (5) of the supporting post (4).

8. A bicycle stand according to claim 7,
characterised in that the stay (51) is formed as an approach ramp for a front wheel of the bicycle (2, 3).

9. A bicycle according to claims 7 or 8,
characterised in that the stay (51) is on the same side as the holder (10) which is provided at a smaller lateral distance from the supporting post (4).

10. A bicycle stand according to any one of claims 7 to 9,
characterised in that the stay (51) is an approximately semi-circular shape.

11. A bicycle stand according to any one of claims 7 to 10,
characterised in that the stay (51) is arranged on an arm (55) and has a greater distance from the supporting post (4) than the one holder (10).

12. A bicycle stand according to any one of claims 7 to 11,
characterised in that the stay (51) has two lateral tube arches (52, 53), with a space between them, which are connected together by a supporting surface (54) for the wheel (55).

13. A bicycle stand according to claim 12,
characterised in that the supporting surface (54) consists of grid material.

14. A bicycle stand according to claims 12 or 13,
characterised in that the space between the tube arches (52, 53) is greater than the width of the front wheel (55) of the bicycle (2, 3).

15. A bicycle stand according to claims 12 to 14,
characterised in that the stay (51) rests with its outer tube arch (52) against a stop (56).

16. A bicycle stand according to any one of claims 4 to 15,
characterised in that at least one securing part (40, 41) is attached on the brackets (23, 24) of the bearers (7, 8).

17. A bicycle stand according to claim 16,
characterised in that the securing part (40, 41) is a securing ring.

## Revendications

1. Porte-bicyclettes (1) comprenant un pied (4) dirigé vers le haut, sur lequel sont prévus deux supports (7, 8) qui dépassent dans des directions opposées perpendiculairement depuis le pied (4), et qui comportent des éléments de maintien (9, 10) pour des bicyclettes (2, 3), lesquels dépassent perpendiculairement depuis les supports (7, 8),
caractérisé en ce que le pied (4) comprend un bras horizontal supérieur (6), depuis lequel dépassent perpendiculairement les supports (7, 8), et en ce que les deux éléments de maintien (9, 10) sont agencés de façon décalée l'un par rapport à l'autre dans la direction de la hauteur du pied (4) et inclinés vers le bas.

2. Porte-bicyclettes selon la revendication 1, caractérisé en ce que l'un des éléments de maintien (9) présente par rapport au bras horizontal (6) du pied (4) une distance plus élevée que l'autre élément de maintien (10).

3. Porte-bicyclettes selon l'une ou l'autre des revendications 1 et 2, caractérisé en ce que les éléments de maintien (9, 10) sont prévus sur un bout de tube (21, 22) agencé en oblique vers le bas et fixé sur le support (7, 8).

4. Porte-bicyclettes selon l'une des revendications 1 à 3, caractérisé en ce que les supports (7, 8) comprennent respectivement un bras de support (23, 24) en forme de plaque et pourvu d'au moins une partie de rigidification (25, 26).

5. Porte-bicyclettes selon l'une des revendications 1 à 4, caractérisé en ce que l'un des supports (8) est prévu à l'extrémité libre du bras horizontal (6) du pied (4), et en ce que l'autre support (7) est prévu à distance de l'extrémité libre du bras horizontal (6).

6. Porte-bicyclettes selon l'une des revendications 1 à 5, caractérisé en ce que les éléments de maintien (9, 10) comprennent des pièces de serrage (11, 12) dans lesquelles les bicyclettes (2, 3) sont maintenues de façon serrée par leur tube central ou leur tube de siège (19, 20).

7. Porte-bicyclettes selon l'une des revendications 1 à 6, caractérisé en ce qu'il est prévu sur un bras vertical (5) du pied (4) un soutien (51) sur l'un des côtés du pied et à distance du sol (57).

8. Porte-bicyclettes selon la revendication 7, caractérisé en ce que le soutien (51) est réalisé sous forme de rampe d'introduction pour une roue avant de la bicyclette (2, 3).

9. Porte-bicyclettes selon l'une ou l'autre des revendications 7 et 8, caractérisé en ce que le soutien (51) est situé du même côté que l'élément de maintien (10) qui est prévu à la plus petite distance latérale du pied (4).

10. Porte-bicyclettes selon l'une des revendications 7 à 9, caractérisé en ce que le soutien (51) est réalisé approximativement sous forme de demi-cercle.

11. Porte-bicyclettes selon l'une des revendications 7 à 10, caractérisé en ce que le soutien (51) est agencé sur un bras (55) et présente vis-à-vis du pied (4) une distance supérieure à l'un des éléments de maintien (10).

12. Porte-bicyclettes selon l'une des revendications 7 à 11, caractérisé en ce que le soutien (51) comprend deux arcs tubulaires (52, 53) latéraux situés à distance l'un de l'autre, lesquels sont reliés l'un à l'autre par l'intermédiaire d'une surface d'appui (54) pour la roue (55).

13. Porte-bicyclettes selon la revendication 12, caractérisé en ce que la surface d'appui (54) est formée d'un matériau en grillage.

14. Porte-bicyclettes selon l'une ou l'autre des revendications 12 et 13, caractérisé en ce que la distance des arcs tubulaires (52, 53) l'un de l'autre est supérieure à la largeur de la roue avant (55) de la bicyclette (2, 3).

15. Porte-bicyclettes selon l'une des revendications 12 à 14, caractérisé en ce que le soutien (51) est appliqué par son arc tubulaire extérieur (52) contre une butée (56).

16. Porte-bicyclettes selon l'une des revendications 4 à 15, caractérisé en ce qu'au moins une pièce de blocage (40, 41) est fixée sur les bras de support (23, 24) des supports (7, 8).

17. Porte-bicyclettes selon la revendication 16, caractérisé en ce que la pièce de blocage (40, 41) est une bague de blocage.
